# EUROPEAN PATENT SPECIFICATION

(11) **EP 2 963 072 B1**
(45) Date of publication and mention of the grant of the patent: **06.09.2023**
(21) Application number: 15001956.0
(22) Date of filing: 01.07.2015
(51) Int. Cl.: C08G 16/02, C08J 9/02, C08G 18/64

(54) **POLYMERIC COMPOSITION FOR MANUFACTURING A POLYPHENOL BASED FOAM MATERIAL, AND PROCESS THEREOF**
POLYMERZUSAMMENSETZUNG ZUR HERSTELLUNG VON POLYPHENOLBASIERTEM SCHAUMSTOFF UND VERFAHREN DAFÜR
COMPOSITION POLYMÈRE POUR FABRIQUER UN MATÉRIAU ALVÉOLAIRE À BASE DE POLYPHÉNOL ET PROCÉDÉ ASSOCIÉ

(30) Priority: 03.07.2014 IT TO20140536
(43) Date of publication of application: 06.01.2016
(73) Proprietor: Silvachimica S.r.l., 12080 San Michele Mondovì (IT)
(72) Inventor: Giovando, Samuele, 12065 Monforte d'Alba (CN) (IT); Basso, Maria, Cecilia, 88000 Epinal (FR)
(74) Representative: Cian, Paolo

(56) References cited:
- WO-A1-2013/010668
- WO-A1-2014/053239

## Description

The present invention generally relates to foam materials, also called foamy or alveolar materials.

In the following description, foam materials mean materials having an at least partially cellular structure that includes various proportions of open and/or closed cells, and therefore either strictly called foam materials the structure of which is substantially solid, possibly partially elastic, and mainly composed of expanded cells, or materials the structure of which is just partially expanded, that is having also a small proportion of expanded cells or cells having been subjected to a moderate expansion only, and possibly having a fluid compactness, such as paints or adhesives intended to be applied on a surface by any method known per se.

Various types of foam materials are known in the market.

For example, polyurethane based foam materials obtained by reaction of polyols and isocyanates, according to a proportion on the order of 50% each, are common.

Polyols and isocyanates used in polymer chemistry have mostly a synthetic origin, since they are largely derived from hydrocarbons, which implies that common polyurethane based foam materials are predominantly non-ecological. Furthermore, some of the substances used are potentially toxic. The polyurethane based foam materials known, have high thermal insulation characteristics, but they are very sensitive to the fire and are therefore easily flammable, and during combustion they release toxic gases.

Also foam materials of the phenolic type are known, which have fire resistance properties better compared to the common polyurethane materials, but they have the disadvantage of being generally more fragile and often more expensive.

Moreover, foam materials or foams are known based on vegetable tannins, for example of the flavonoid type, which consist of small poly-phenolic molecules, mainly water-soluble, extracted from various plant species, which, deriving from natural substances, are mainly environmentally friendly.

In fact, vegetable tannins on which these known materials are based are non-toxic compounds having a high reactivity, which are considered to be acceptable from the environmental impact point of view, because they have a renewable nature, and also have the advantage of having an affordable cost in view of their industrial use.

Because of their phenolic nature, vegetable tannins were used in combination with furfuryl alcohol to prepare foam materials of the tannin-furan type in an acid environment, as described in the patent application WO-2013/010668, as well as in various scientific papers ("Industrial Crops and Products", by G. Tondi, A. Pizzi, 29, 2009, 356-363, and "Industrial Crops and Products", by C. Lacoste, M. C. Basso, A. Pizzi, M. P. Laborie, A. Celzard, V. Fierro, 43, 2013, 245-250). WO 2014/053239 A1 discloses compositions based on vegetable tannins, free from formaldehyde and low-boiling organic solvents, for manufacturing a foam material. The example M2 describes a composition comprising tannins, p-TSA as acid catalyst, furfuryl alcohol as a substance able to react with the tannins, water as foaming agent, pMDI as polyisocyanate and PEG400 as a substance able to react with the isocyanate. No low-boiling solvent is used.

WO-2013/010668 discloses a composition for manufacturing a foam material based on flavonoid tannins, in which isocyanate could be used solely with the function of an additive to increase mechanical strength of the foam material, according to an amount in the range of 5% to 20% of the composition. The tannin used in the composition of this document is greater than 40% and less than 45% by weight of the composition. This composition necessarily requires use of low-boiling solvents. These known foam materials are suitable for applications similar to those of the common polyurethane foam materials, since they have similar performances, and often some better properties and characteristics, such as a higher fire resistance.

The compositions used for manufacturing these known foam materials are mostly suitable to a limited series production, by means of discontinuous systems of the so-called batch type. Moreover, these known compositions require the use of low-boiling solvents in order to allow expansion of the material.

However, the use of low-boiling solvents that, by their nature, generate flammable vapours, requires production lines equipped with suction and treatment systems for such vapours, and therefore relatively complex and expensive.

In particular, the invention relates to a composition of the type defined in the preamble of the appended claim 1.

Such a composition is known from WO-2014/053239 that discloses a composition lacking in low-boiling solvents for manufacturing a tannin based foam material, in which a relatively low amount of isocyanate is used, particularly not more than 10% by weight of .the composition.

The main object of the invention is to propose a polymer composition having a mixed tannin-furan-polyurethane structure generally similar to that of the common polyurethane materials but completely free of low-boiling solvents, which has characteristics suitable for use in various industrial applications, such as a good fire resistance and a high mechanical strength even under the effect of the fire, and that therefore is not effected by typical drawbacks of the common polyurethane materials.

Another object of the invention is to propose a composition adapted for manufacturing a foam material that can be made indifferently by means of batch manufacturing processes or by continuous manufacturing processes, in the latter case to allow the relevant material to be produced in relatively large amounts.

More specifically, the invention arises from the idea that a large part or all of the polyols may be replaced with tannins in a foam material having a structure similar to that of common polyurethane foam materials, which would enable to obtain an innovative foam material with more environmentally friendly characteristics compared with the conventional polyurethane materials.

Although the possibility of obtaining such a foam material has been theoretically hypothesized, no example of application of such idea is known, because of the fact it entails practical difficulties of implementation which have not overcome up to now.

According to the invention, the composition has a mixed tannin-furan-isocyanate structure in which tannins are part of a resin having the function of a reactant for the composition, the composition being completely free of low-boiling solvents, the amount of isocyanate being substantially greater than 1% by weight of the composition, preferably not less than 10% by weight of the composition.

According to another preferred feature, the composition comprises an actual amount of acid catalyst that is not greater than 20% by weight of the composition, which is conveniently in the range between 2% and 19% by weight of the composition, and is preferably in the range between 4% and 10% by weight of the composition.

According to still another preferred feature, the composition comprises an amount of tannins in the range between 15% and 50% by weight of the composition, preferably between 20% and 45% by weight of the composition.

### GENERAL DESCRIPTION OF THE INVENTION

The present invention essentially consists of a composition comprising the following main components:
- a Component I based on isocyanate,
- a Component C based on an acid, adapted to perform the function of a catalyst,
- a component R in the form of a tannin based polyphenolic resin, including:
- tannins,
- at least one substance adapted to react with the tannins in the presence of the acid catalyst consisting of the component C, and
- at least one substance adapted to react with the isocyanate of the Component I in the presence of the acid catalyst consisting of the component C.

The functions of the above substances adapted to react with the tannins and with the isocyanate, may be performed by several substances or a by single substance.

Further objects and advantages of the invention are defined in the appended claims.

By virtue of the invention, it is possible to obtain a polyphenolic based foam material having a structure generally similar to that of the polyurethane foam materials, but totally free of low-boiling solvents, essentially comprising tannins, an isocyanate and a catalyst, which constitutes a mixed tannin/furan/isocyanate system.

The composition and the foam material of the invention have various advantages compared to the common polyurethane foam materials. For example, in the foam material according to the invention, polyols of synthetic origin are present in a greatly reduced amount because they are replaced, totally or in a large amount, by the tannins, which constitutes an advantage, especially from the environmental compatibility point of view.

By way of example, in a composition according to the invention, the amount of the isocyanates used may vary in the range of about 1% and 35% by weight of the composition.

The foam material of the invention has a series of physical characteristics that make it attractive for use in various industrial applications, such as a good fire resistance and a high mechanical strength, even under the action of the fire. In particular, since such a material, and the composition allowing its manufacture, is completely free of volatile organic solvents, such as low-boiling solvents that are instead used to manufacturing the conventional polyurethane foam materials, its manufacture is safer and involves a less environmental impact.

A. foam material according to the invention can be produced in a relatively easily manner and at a low cost, either through batch production systems, or by continuous production plants. In the latter case, the foam material can be manufactured industrially in high amounts by using the same machines used for manufacturing the polyurethane foam materials on an industrial scale, without requiring specific adaptations of the respective plants. Production of the foam materials of the invention can take place at ambient temperature without any particular problem, which facilitates their production in line.

The various components of the composition mentioned above are described in more detail below.

### COMPONENT I

The isocyanate based Component I may comprise any isocyanate, for example of the type that can be used for manufacturing conventional polyurethane foam materials.

Among the isocyanates of the component I, aromatic isocyanates, such as toluene diisocyanate (TDI), are included, isomers thereof or mixtures of isomers, methyl-bis (phenylisocyanate) (MDI), isomers thereof or mixtures of isomers and different modified forms thereof, poly(methylene)-poli(phenyl)-poli (isocyanate) (PMDI), quasi-prepolymers of MDI, paraphenylene diisocyanate (PPDI), 1,5-naphthalene diisocyanate (NDI), or mixtures thereof.

Also, aliphatic and cycloaliphatic isocyanates can be used, such as hexamethylene diisocyanate (HDI) and derivatives therof, biuret and isocyanurates, isophorone diisocyanate (IPDA), hydrogenated MDI (H12MDI), or mixtures thereof.

Moreover, adducts of diisocyanates with trimethylolpropane (TMP) can be used, or even adducts with toluene diisocyanate (TDI). It is also possible to use diisocyanates of a renewable origin, such as dimeryl diisocyanate (DDI) that is a linoleic acid derivative.

Possibly, the component I may include one or more additives intended, for example, to reduce viscosity of the composition, such as tris(1-chloro-2-propyl)phosphate (TCPP).

### COMPONENT C

The Component C contains at least one acid, such as paratoluenesulfonic, xilensulfonic, phenolsulfonic, benzenesulfonic, trichloroacetic, boric, phosphoric or sulfuric acid, or mixtures thereof, and performs the function of a catalyst for the reactions to which the composition is subjected to during formation of the foam material.

Conveniently, one or more of the acids mentioned above are used in the Component C in a solution, typically an aqueous solution. As an alternative or in combination, the at least one acid of the Component C may be dissolved in glycols, including preferably ethylene glycol or propylene glycol, or glycerol, and it can include surfactants or wetting agents.

### COMPONENT R

The polyphenol resin of the Component R, as stated above, comprises substantially: tannins, also in the form of a mixture of tannins, a substance intended to react with the tannins in the presence of the acid catalyst of the Component C, and a substance intended to react with the isocyanate of the Component I in the presence of the catalyst of the Component C.

As tannins, one or more of the following types can be used:
- condensed tannins of the procyanidin and/or prodelphinidin type, for example of maritime pine (Pinus pinaster), of Chilean pine (Araucaria Araucana), of Pecan nut (pecan), spruce (Picea abies), of Douglas Fir,
- condensed tannins of the prorobinetinidin and/or profisetinidin type, for example of Mimosa (Acacia mearnsii, Acacia mollissima, Acacia mangium), of Quebracho (Schinopsis lorentzii, Schinopsis balansae),
- hydrolyseable tannins, for example of chestnut (Castanea sativa, Castanea vesca), of Tara (Caesalpinia spinosa),
- tannins of any one of the types mentioned above, that are processed or chemically modified (oxidized, acetylated, esterified, ethoxylated, propoxylated, with the introduction of amino groups or polymerized tannins),
- synthetic tannins,
or any mixture of the above mentioned tannins.

These tannins can be associated with possible other additives or auxiliary components.

Although the tannins can be used in an amount in the range between 15% and 50% by weight of the composition, this amount is preferably between 20% and 45% by weight of the composition.

As a substance intended to react with the isocyanate of the Component I, particularly in the presence of the acid catalyst of the Component C, it is meant, for example, one or more of the following substances:
sugars, lignin, lignosulphonates, naphthalenesulphonates and other compounds with active hydrogens, such as polyols and amines, for example ethylene glycol, triethylene glycol, glycerol, soritol, trimethylolpropane, dipropylene glycol, 1,4-butanediol, 1,3-propanediol, propylene glycol, polyesters with terminal hydroxyls, polycaprolactones, polycarbonates with terminal hydroxyl groups, hexamethylenetetramine, ethanolamine, diethanolamine, 1,6-diaminoethane, diisopropanolamine, polyethers with hydroxyl terminal groups, such as polyoxyethylene glycols, polyoxypropylene glycols, polyoxyethylene-polyoxypropylene glycols, poliossibutilene glycols and polyols, polyols based on glycerol, pentaerythritol, sorbitol, mannitol, sucrose, glucose or other disaccharides and polysaccharides, including starch, cellulose, derivatives of mercaptans, polyols derived from alkanolamines and polyoxyalkylene, polymers derived from amines such as ethylenediamine, triethanolamine and toluenediamine, oils and derivatives such as castor or linseed oil and their modifications, amino acids and proteins.

As substances intended to react with the tannins, especially in the presence of the acid catalyst of the Component C, one or more of the following substances, for example, are considered:
furfuryl alcohol, aldehydes such as formaldehyde, glutaraldehyde, glyoxal, acetaldehyde, furfural, 5-hydroxymethylfurfural, terpenic aldehydes, acrolein, esters of the levulinic acid, 2,5-furandicarboxylic aldehyde, furfural dialdehyde, urea, hexamethylenetetramine, 1,6-diaminoethane.

If the substances listed above, which are adapted to react either with the isocyanate or with the tannins, are in liquid form at the temperature of use, they can obviously also have the function of a solvent for the tannins or of a fluidizer for the Component R, or if convenient, they can be added to the formulation separately with respect to the Component R.

### POSSIBLE ADDITIVES

The composition may include optional additives or auxiliary components in addition to the components I, C and R, and taking into consideration the structure and the characteristics of the production plants used, as well as the applications of the manufactured foam materials.

In particular, it may be convenient to use one or more of the additives listed below:
- fluidifying agents, dispersants such as naphthalenesulphonates, lignosulphonates, propylene glycol n-butyl ether, propylene glycol methylether, ethylene glycol, dipropylene glycol, diethylene glycol, urea, triscloroisopropil phosphate (TCPP),
- surfactants or wetting, nonionic and/or ionic emulsifying and/or surface-active stabilizing agents, preferably water soluble compounds and stable in an acid medium and not hydrolyzable compounds, such as siloxane-oxyalkene copolymers, condensation products of the ethylene oxide with castor oil, polyethoxylated fatty acid esters, surface-active agents belonging to the tween series, polyethers and polyalcohols that include condensation products of the ethylene oxide or the propylene oxide with alkylphenols, fatty acids, fatty alcohols, amines and fatty amines, oxides amines, alkyl silanes and silicones, polypropylene glycol-polyethylene glycol block copolymers.

Other possible surface active agents may consist of:
lauryl sulphate of sodium ethoxylate, sodium dodecylbenzenesulphonate, dioctyl sulphosuccinate, sodium parafin sulfonate,
- curing accelerator agents, such as phenol, metacresol, cardanol, methyl glucoside, polyvinyl alcohol;
- cross-linking agents, such as polyvinyl pyrrolidone (PVP), diphenyl phosphite (DPP),
- agents for improving the mechanical strength, such as inorganic or organic fillers,
- hydrophobic agents, such as oils, lecithins, paraffins and derivatives thereof,
- plasticizing agents, such as polyalcohols, glycerol, polyethylene glycol or proteins (albumin, soy protein),
- "cell opening" agents,
- neutralizing agents, such as magnesium or calcium carbonate, sodium tetraborate, aluminum hydroxide, zinc powder, possibly encapsulated.

These additives may be included in one of the Components I, C or R at the time of their preparation, in which case they must be stable as they are, as long as they are part of the respective Component, and they must be able to participate in the reaction only as a result of the contact between the various Components of the composition, particularly in the presence of the isocyanate of the Component I and the catalyst of the Component C. In particular, if these additives are included in the Component I, they must not react directly with the isocyanate contained in it, if they are included in the Component C they must not react directly with the acid catalyst, or if they are included in the Component R they must not react directly for example with the tannin.

As an alternative, or if is necessary, these additives may be part of a component other than the Components I, C or R and independent from them, which is intended to be added separately to the system.

In any case, the amount of additives that can be used is not greater than 20% by weight of the composition.

Although adding water to the composition, in addition to that already originally contained in the various additives and reactants used, is not compulsory, it may be convenient in certain circumstances. In this case, water may be added in an amount not exceeding 20% by weight of the composition. In particular, an amount of water can be added to the Component R or to the Component C, or it can be added to the system separately with respect to the various Components.

The composition here described allows a self-expanding system to be obtained, considering that reaction between the various components generates CO₂ which has the function of a blowing agent for the foam material.

Although it is not generally required the addition of a separate blowing agent, in the event this should be useful or convenient for promoting expansion of the composition, one or more blowing agents can be used to be added separately to the composition, such as:
- substances adapted to generate a blowing agent in situ as a result of their participation in the chemical reactions, or to change the pH value or the temperature of the composition, such as zinc powder and salts, such as bicarbonates;
- blowing agents insufflated into the composition in a manner independent of the components of the composition, such as air or other compressed gas, e.g. CO₂.

The water, either contained in the various reactants and additives or possibly added from outside the system, can also perform the function of a blowing agent, depending on the temperature reached by the composition.

By means of the composition of the invention, a foam material with good properties of fire resistance can be manufactured by a continuous production system or by a batch system, which is derived from widely available and renewable natural resources, and therefore environmentally friendly, by virtue of the fact that the resin used therein is mainly naturally derived.

The ratio between open and closed cells of the foam material so obtained can be changed at will depending on the relative amounts of the components used and the process conditions, so that it can be adapted to several applications intended for use in different fields.

The invention relates also to a foam material that can be obtained from such a composition, as well as to a process for manufacturing the foam material starting from the composition.

### PROCESS

A foam material according to the invention, may be manufactured by using the process described below.

Firstly, the Components I, C and R are prepared separately.

In particular, the substance or the mixture of the chosen substances constituting the Ccomponent I, on the one part, and the substance or the mixture of the substances constituting the Component C, on the other part, are prepared.

Typically, the amount of the isocyanate of the Component I is substantially greater than 1% by weight of the composition, preferably not less than 10% by weight with respect to the composition, and advantageously not less than 15% by weight with respect to the composition.

As far as the Component C is concerned, the acid or the mixture of acids selected are preferably prepared in the form of a solution in water or ethylene glycol, propylene glycol and/or glycerol, which performs the function of a diluent of the acid substance, both to moderate the activity thereof, and to make it fluid and facilitate its mixing.

The actual amount of acid catalyst used in the Component C, that is the amount of acid of the Component C out of the solvent used to dissolve it, is not greater than 20% by weight of the composition, and it is preferably between 2% and 19% by weight of the composition. Conveniently, the actual amount of the acid catalyst is between 4% and 10% by weight of the composition.

The Component R is prepared by mixing the tannins, usually in the form of a powder, together with the substances intended to react with the tannins in the presence of the acid catalyst of the Component C, and the substance intended to react with the isocyanate of the Component I in the presence of the acid catalyst of the Component C. Of course, the substances used must not react with each other or with the tannins of the Component R until the latter is mixed with the Component C or with the Component z. In the case of problems of instability of the various substances upon the mixing thereof, they can be kept separated until their use.

The amount of tannins used to prepare the Component R is comprised in the range between 15% and 50% by weight of the composition, preferably between 20% and 45% by weight of the composition.

Possible additives are then added to the Component R so obtained, and mixed in order to obtain a homogeneous mass.

The Component R may possibly be subjected to a prepolymerization stage by exposure to small amounts of acid or by heat treatment, in order to form in it oligomers of the polymer, and to promote cross-linking so that it occurs partially.

Then, the Component R and the Components I and C are mixed to each other and with other possible additives or auxiliary components in order to allow the envisaged reactions to occur, until the expansion stage of the composition, during which formation of the foam material takes place.

The amount of additives used, either to prepare the Component R or as auxiliary components added separately to the Components I, C and R, is in total not more than 20% by weight of the composition.

The preparation can be carried out by using, depending on the requirement, a production system of the batch type or of the continuous type, either at a fixed temperature, or by following a program of variable temperatures in the range between the ambient temperature (20°÷25°C) and 90°C, for example in the case where it is useful to vary the execution speed of the reactions. In particular, the expansion step of the material can take place at the ambient temperature, while the cross-linking step, after expansion, can be performed in a furnace at a higher temperature so as to reduce the overall time of the process.

After performing the process, curing processes can be carried out on the foam material by applying heat (40°÷80°C); if necessary, the manufacturing process of the foam material can take place in the presence of ammonia vapours, so as to neutralize acidity due to the acid catalyst of the component C.

Then, the surface of the foam material so obtained can be processed by performing ancillary processes known per se, in order to modify it according to the need, for example by application of coating layers.

The foam materials so obtained can be easily shaped by means of cutting operations, to fit their size to those most suitable for use. They may also be coupled to other materials, such as metal sheets or panels derived from wood or plastic materials or other types of laminated or the like, to make sandwich panels.

The process according to the invention can be used, other than for manufacturing materials having a predominantly and macroscopically expanded structure, for manufacturing materials having a moderately expanded structure such as paints or adhesives that can be used to make coating or adhesives layers suitable to be applied on the surface of various products, with the function of layers for surface finishing or as adhesive layers.

The structure also only partially expanded of these materials allows a layer at least partially soft and elastic to be formed on the products on which they will be applied, which is often required by the automotive industry, for example to reduce or prevent transmission of mechanical vibrations and/or with a sound-absorbing function so as to reduce noises, during the use of the relevant products.

### EXAMPLES

In the following, some practical examples of possible compositions adapted for manufacturing tannin based foam materials according to the invention, are provided, as well as an example of the process used. Of course, the function of these examples is not limitative to the range of the invention that is however defined by the scope of the appended claims.

**Table 1. Composition of tannin based foam materials according to the invention**

| ***Component*** | ***Formulation*** | ***MF918*** | ***R80 bis*** | ***FP 88*** | ***MQ 105*** | ***MQ 103*** | ***MQ 80*** | ***PPF P R10*** |
|---|---|---|---|---|---|---|---|---|
| R | Tannin g (%) | 30 (30.6) | 30 (30.5) | 30 (31.1) | 30 (36.9) | 30 (36.9) | 30 (44.1) | 30 (31.0) |
| | glyoxal (40% in water) g (%) | 0 (0) | 3 (3.0) | 3 (3.1) | 1.5 (1.8) | 2.3 (2.8) | 0 (0) | 2.1 (2.2) |
| | furfural alcohol g (%) | 24.4 (24.9) | 24 (24.4) | 24 (24.8) | 14 (17.2) | 14 (17.2) | 17 (25.0) | 24 (24.8) |
| | water g (%) | 0 (0) | 6.2 (6.3) | 5.4 (5.6) | 1.3 (1.6) | 0 (0) | 6 (8.8) | 6.2 (6.4) |
| | nonionic surfactant* g (%) | 2.5 (2.6) | 0 (0) | 0 (0) | 1.5 (1.8) | 1.5 (1.8) | 1 (1.5) | 4 (4.1) |
| | silicon nonionic surfactant**g (%) | 0 (0) | 2 (2.0) | 2 (2.1) | 0 (0) | 0 (0) | 0 (0) | 0 (0) |
| | ethylene glycol g (%) | 1 (1.0) | 2.2 (2.2) | 3.1 (3.2) | 5 (6.2) | 6.6 (8.1) | 0 (0) | 1 (1.0) |
| I | TCPP g (%) | 0 (0) | 0 (0) | 0 (0) | 6 (7.4) | 6 (7.4) | 4 (5.9) | 0 (0) |
| | PMDI^{∗∗∗} g (%) | 30 (30.6) | 24 (24.4) | 22.4 (23.2) | 15 (18.5) | 14 (17.2) | 3 (4.4) | 16.4 (16.9) |
| C | phenolsulfonic acid (65% in water) g (%) | 0 (0) | 7 (7.1) | 6.7 (6.9) | 0 (0) | 0 (0) | 0 (0) | 0 (0) |
| | phenolsulfonic acid (65% in ethylene glycol) g (%) | 10 (10.2) | 0 (0) | 0 (0) | 7 (8.6) | 7 (8.6) | 7 (10.3) | 13.15 (13.6) |

| | | | | | | | | |
|---|---|---|---|---|---|---|---|---|
| * Xiameter, OFX-0193 Fluid; ** Evonic, Tegostab 88406; *** Dow Chemical Co., Voranate M220 | | | | | | | | |

The Table 1 above refers to seven different compositions according to the invention, from which respective foam materials indicated MF918, R80 bis, FP 88, MQ 105, 103 MQ, MQ 80, PPF P R10, were obtained. Each of the foam materials of Table 1 was obtained starting from a system including the Components I, C and R described above.

In the case of the examples of Table 1, the Ccomponent I comprises PMDI (poly(methylene)-poli(phenyl)-poli(isocyanate)], which constitutes the active substance of the Component I, and possibly TCPP [tris(1-chloro-2-propyl) phosphate], having the function of diluent for the PMDI. The PMDI was used according to an amount variable in the range between 4.4% and 30.6% by weight of the composition, depending on the sample, therefore greater than 1% by weight with respect to the composition.

The Component C containing the acid catalyst, in the case of the examples of Table 1, consists of phenolsulfonic acid in an aqueous solution or in a solution of ethylene glycol, in both cases at 65%. Depending on the sample, the amount of the Component C used varies in the range between about 6.9% and 13.6% by weight of the composition. Taking into account that, in the specific case, the Component C comprises an acid catalyst in solution in ethylene glycol, the actual amount of phenolsulfonic acid used in the various samples of Table 1, varies between about 4.48% and 8.84% by weight of the composition.

Furthermore, in the Component R of the samples of Table 1, an amount of tannins generally in the range between about 29% and 41% by weight of the composition was used. The amount of tannins, according to other formulations not referred in the examples, but that are included within the scope of the appended claims, falls in the range between about 15% and 50% by weight of the composition, advantageously between 20% and 45% by weight of the composition.

The Component R, as described in the examples referred to above, constitutes a system stable over the time, which can be packaged and stored for several months without any change in its reactivity. This promotes the industrialization of the composition according to the present invention. In the event in which one or more substances, such as glyoxal, may cause instability of the system of the Ccomponent R, these can be added to the formulation as separate components, only at the time of mixing of the various components.

In the various materials of the examples, as can be seen from the formulations, the expansion takes place without any addition of blowing agents from the outside. In fact, as a result of the reaction between the various components, development of CO₂ takes place, which acts as a blowing agent, as already stated above.

During preparation of the Component R for the various samples mentioned above, the tannins, in powder form, are added under continuous stirring to a mixture consisting of furfuryl alcohol, a surfactant or wetting agent consisting of a polyalkylsiloxane-polyoxyalkylene copolymer, such as Xiameter OFX-193 Fluid or Evonic Tegostab B8406, of ethylene glycol and, as the last, of possible glyoxal (in a 40% aqueous solution). Possible water can also be added. In particular, furfuryl alcohol, in addition to performing the function quoted above in the description of the Component R, acts also as a solvent for the tannins, while glyoxal is used as an additive, dosed as a further component and added separately.

The mixture so prepared was stirred until it reached the complete homogeneity.

The process for the production of foam materials in small scale, for example during execution of laboratory tests or small productions in batch, was carried out by stirring the Component R, the isocyanate based Component I and the Component C having the function of a catalyst, at ambient temperature, in this order of addition, and by means of vigorous mechanical stirring (10-15 seconds after addition of each component).

In the case of the example, the foam materials were obtained at ambient temperature (22 ± 2°C).

### ANALYSIS OF THE SAMPLES

The samples of the foam materials so obtained, once stabilized, were cut in the form of parallelepipeds of known size, and weighed in order to determine their apparent density (g/cm³).

The various samples were then dried at 50°C until reaching a constant weight, and kept in a drier.

In order to determine the reaction to fire of the samples, the flame of a Bunsen burner was made to affect their lower edge for 15 seconds. After having withdrawn the flame, the speed of propagation of the fire was recorded, and possible detachment of particles or drops on flame was evaluated in a time interval of 20 seconds.

Thermal conductivity was determined at ambient temperature by the transient method "Transient Plane Source" (TPS, Hot Disk TPS 2500).

The polymeric structure of the foam materials so obtained was then studied by applying the MALDI-TOF (Matrix Assisted Laser Desorption/Ionization Time of Flight) analysis technique, by determination of the mass of the samples through ionization performed by means of a nitrogen pulsed laser. This analysis confirms that the samples so obtained have a structure the composition of which is mixed tannin-furan-polyurethane polymeric.

In fact, the analysis of the mass spectra obtained by the MALDI-TOF analysis technique shows that the catalyst and the aldehyde, when the latter is used, react with the isocyanate, and that the structure of the polymer so obtained is of a surely innovative type, by virtue of the fact that the isocyanate reacts to form urethanes with the - OH groups on the molecule of the tannin and/or with the -OH groups on the furan ring of the furfuryl alcohol used in the composition. Also the molecular masses of these substances are perfectly recognizable from the MALDI-TOF analysis.

Therefore, a composition of this type has the advantage that the physical-mechanical characteristics of the polymer so obtained can be modulated, such as the mechanical strength or the fire resistance, which are intermediate between those of the polyurethanes and of the tannin-furan polymers known up to now. In particular, the chemical structures of the polymer are clearly different from those of the known polymers used in the field of foam materials in general, in particular from those based on polyurethane foams.

Furthermore, the mixed polymer material obtained, has also the advantage of having a natural character.

### TEST RESULTS

The following Table 2 shows the induction and cross-linking times recorded during the expansion process, with reference to the different samples obtained from the compositions or formulations already shown in Table 1.

**Table 2 - Induction and cross-linking times for the samples of Table 1**

| ***Formulation*** | ***MF91* 8** | ***R80 bis*** | ***FP 88*** | ***MQ 105*** | ***MQ 103*** | ***MQ 80*** | ***PPF P R10*** |
|---|---|---|---|---|---|---|---|
| *Induction time* (s) | 30 | 180 | 160 | 140 | 120 | 150 | 80 |
| *Cross-linking time* (s) | 60 | 60 | 60 | 100 | 60 | 90 | 110 |

In particular, the "induction time" is the time elapsed from the end of the simultaneous mixing of the components and the beginning of the expansion, and the "cross-linking time" is the time elapsed from starting of the expansion until the end of growth, or expansion, of the foam material, that is the time required for the foam material to reach a consistency allowing it to be cut without damaging its structure.

The "induction time" is the time which substantially corresponds to the so-called "cream time" for the polyurethane expansion process.

As shown in Table 2, the induction and crosslinking times vary depending on the proportions of the Components used in each formulation. In other words, by varying the formulation of each composition, materials with different characteristics can be obtained, which are suitable for different needs required for the type of process used. In particular, some of the foam materials obtained have longer induction times making possible the mixture to be homogenized in a mold, which can be useful, for example, in the event of batch production processes, while for other foam materials the induction times are lower, as in the case of the formulation MF918, which makes them suitable for a process carried out at ambient temperature in a continuous production plant, of the same type used for manufacturing polyurethanes, without the need of substantial changes to such plants.

The values mentioned in Table 2, which have an indicative nature, are conditioned by the intensity of the stirring, by the type of the stirrer used and by the process temperature. Differences in reactivity with respect to the values indicated above may also be determined by the execution of the process in an industrial plant for continuous production.

All foam materials obtained show the fundamental characteristic of having a very homogeneous appearance, free from any defects. Depending on the formulation, the expanded materials obtained are slightly brown, gray or black coloured. Their density is in the range between 0.04 and 0.08 g/cm³. Since the density measured for all the samples was less than 0.1 g/cm³, it should be concluded that the foam materials of the invention, as reported in the examples described above, have features suitable for insulation applications. In particular, in the case of the sample MF918 a thermal conductivity of 0.036 W/m·K was measured.

According to the tests carried out, all samples have shown remarkable properties of fire resistance. In fact, for each of them a virtually instantaneous self-extinguishing occurred, and no phenomena of leaking or detachment of particles or drops on flame have been shown.

## Claims

1. Polymeric composition for manufacturing a polyphenol based foam material comprising isocyanate, an acid catalyst and tannins,
**characterized in that** it has a tannin-furan-isocyanate mixed structure in which the tannins are part of a resin having the function of a reactant for the composition, and **in that** it is totally free of low-boiling solvents, the amount of isocyanate being not less than 10% by weight with respect to the composition.

2. Composition according to claim 1, **characterized in that** the amount of isocyanate is not less than 15% by weight with respect to the composition.

3. Composition according to claims 1 or 2, **characterized in that** the amount of the tannins is less than 40% by weight of the composition, preferably between 15% and 40% by weight of the composition.

4. Composition according any one of claims 1 to 3, **characterized in that** said resin having the function of a reactant for the composition, is a tannin based polyphenolic resin including at least a substance intended to react with the tannins in the presence of the acid catalyst, and at least a substance intended to react with the isocyanate in the presence of the acid catalyst.

5. Composition according to any one of claims 1 to 4, **characterized in that** the amount of the acid catalyst is not greater than 20% by weight of the composition, and it is preferably in the range between 2% and 19% by weight of the composition.

6. Composition according to claim 5, **characterized in that** the amount of the acid catalyst is in the range between 4% and 10% by weight of the composition.

7. Composition according to any one of claims 1 to 5, **characterized in that** the acid catalyst is used as a solution with water, ethylene glycol, propylene glycol, other glycols or glycerol, or with a mixture thereof.

8. Composition according to any one of claims 1 to 7, **characterized in that** it includes additives according to an amount not exceeding 20% of the composition, such as water, fluidizing agents, dispersant agents, surfactants or wetting agents, emulsifiers and/or surface-active stabilizing agents, curing accelerator agents, crosslinking agents, agents for improving mechanical strength, hydrophobizing agents, "cell opening" agents, and/or neutralizing agents.

9. Polyphenol based foam material, **characterized in that** it is obtainable from a composition according to any one of claims 1 to 8.

10. Process for manufacturing a polyphenol based foam material starting from a polymeric composition according to any one of claims 1 to 8, comprising isocyanate, an acid catalyst and tannins, **characterized in that** it comprises the steps of:
- preparing a first component (Component I) including isocyanate,
- preparing a second component (Component C) including an acid or a mixture of acids, having the function of a catalyst,
- preparing a third component (Component R) in the form of a polyphenolic resin having the function of a reactant, which includes:
- tannins,
- at least one substance intended to react with the tannins in the presence of said catalyst consisting of an acid or of a mixture of acids, and
- at least one substance intended to react with the isocyanate in the presence of said catalyst consisting of an acid or of a mixture of acids,
- mixing said first, second and third components with each other, allowing them to react with each other to form the foam material.

11. Process according to claim 10, **characterized in that** it comprises the step of preparing said first component (Component I) by using an amount of isocyanate substantially greater than 10% by weight with respect to the composition.

12. Process according to claim 11, **characterized in that** the amount of the isocyanate used to prepare said first component (Component I) is not less than 15% by weight with respect to the composition.

13. Process according to any one of claims 10 to 12, **characterized in that** it comprises the step of preparing said second component (Component C) by using an acid or a mixture of acids according to an amount not greater than 20% by weight of the composition, preferably in the range between 2% and 19% by weight of the composition.

14. Process according to claim 13, **characterized in that** the amount of the acid or the mixture of acids used to prepare said second component (Component C) is in the range between 4% and 10% by weight of the composition.

15. Process according to claim 13 or 14, **characterized in that** it comprises the step of forming said second component (Component C) as a solution of said acid or mixture of acids in water, ethylene glycol, propylene glycol, other glycols or glycerol, or in a mixture thereof.

16. Process according to any one of claims 10 to 15, **characterized in that** it comprises the step of preparing said third component (Component R) by using an amount of tannins in the range between 15% and 50% by weight of the composition, preferably between 20% and 45% by weight of the composition.

17. Process according to any one of claims 10 to 16, **characterized in that** it comprises the step of adding additives to said composition according to an amount not exceeding 20% by weight of the composition, such as water, fluidizing agents, dispersant agents, surfactants or wetting agents, emulsifiers and/or surface-active stabilizing agents, curing accelerator agents, crosslinking agents, agents for improving the mechanical strength, hydrophobizing agents, "cell opening" agents, and/or neutralizing agents, said additives being incorporated in at least one of said first, second or third component (Components I, C, R), or being part of a different component, independent to said first, second or third component (Components I, C, R) and adapted to be added to the mixture after mixing of said first, second or third component (Components I, C, R).

## Patentansprüche

1. Polymere Zusammensetzung zur Herstellung eines Schaumstoffs auf Polyphenolbasis, enthaltend Isocyanat, einen Säurekatalysator und Tannine,
**dadurch gekennzeichnet, dass** sie eine Tannin-Furan-Isocyanat-Mischstruktur aufweist, in der die Tannine Teil eines Harzes sind, das die Funktion eines Reaktanten für die Zusammensetzung hat, und dass sie völlig frei von niedrig siedenden Lösungsmitteln ist, wobei die Menge an Isocyanat nicht weniger als 10 Gew.-%, bezogen auf die Zusammensetzung, beträgt.

2. Zusammensetzung nach Anspruch 1, **dadurch gekennzeichnet, dass** die Menge an Isocyanat nicht weniger als 15 Gew.-%, bezogen auf die Zusammensetzung, beträgt.

3. Zusammensetzung nach Anspruch 1 oder 2, **dadurch gekennzeichnet, dass** die Menge der Tannine weniger als 40 Gew.-% der Zusammensetzung, vorzugsweise zwischen 15 und 40 Gew.-% der Zusammensetzung, beträgt.

4. Zusammensetzung nach einem der Ansprüche 1 bis 3, **dadurch gekennzeichnet, dass** das Harz, das die Funktion eines Reaktanten für die Zusammensetzung hat, ein polyphenolisches Harz auf Tanninbasis ist, das mindestens eine Substanz enthält, die dazu bestimmt ist, in Gegenwart des Säurekatalysators mit den Tanninen zu reagieren, und mindestens eine Substanz, die dazu bestimmt ist, in Gegenwart des Säurekatalysators mit dem Isocyanat zu reagieren.

5. Zusammensetzung nach einem der Ansprüche 1 bis 4, **dadurch gekennzeichnet, dass** die Menge des Säurekatalysators nicht mehr als 20 Gew.-% der Zusammensetzung beträgt und vorzugsweise im Bereich zwischen 2 und 19 Gew.-% der Zusammensetzung liegt.

6. Zusammensetzung nach Anspruch 5, **dadurch gekennzeichnet, dass** die Menge des Säurekatalysators im Bereich zwischen 4 und 10 Gew.-% der Zusammensetzung liegt.

7. Zusammensetzung nach einem der Ansprüche 1 bis 6, **dadurch gekennzeichnet, dass** der Säurekatalysator als eine Lösung mit Wasser, Ethylenglykol, Propylenglykol, anderen Glykolen oder Glycerin oder mit einer Mischung davon verwendet wird.

8. Zusammensetzung nach einem der Ansprüche 1 bis 7, **dadurch gekennzeichnet, dass** sie Additive in einer Menge enthält, die 20 % der Zusammensetzung nicht übersteigt, wie z. B. Wasser, Fluidisierungsmittel, Dispergiermittel, Tenside oder Netzmittel, Emulgatoren und/oder oberflächenaktive Stabilisierungsmittel, Härtungsbeschleuniger, Vernetzungsmittel, Mittel zur Verbesserung der mechanischen Festigkeit, Hydrophobierungsmittel, "zellöffnende" Mittel und/oder Neutralisierungsmittel.

9. Schaumstoff auf Polyphenolbasis, **dadurch gekennzeichnet, dass** er aus einer Zusammensetzung nach einem der Ansprüche 1 bis 8 erhältlich ist.

10. Verfahren zur Herstellung eines Schaumstoffs auf Polyphenolbasis, ausgehend von einer polymeren Zusammensetzung nach einem der Ansprüche 1 bis 8, enthaltend Isocyanat, einen Säurekatalysator und Tannine, **dadurch gekennzeichnet, dass** es die folgenden Schritte umfasst:
- Herstellung einer ersten Komponente (Komponente I), die Isocyanat enthält,
- Herstellung einer zweiten Komponente (Komponente C), die eine Säure oder eine Mischung von Säuren enthält, die die Funktion eines Katalysators haben,
- Herstellung einer dritten Komponente (Komponente R) in Form eines polyphenolischen Harzes, das die Funktion eines Reaktanten hat, umfassend:
- Tannine,
- mindestens eine Substanz, die dazu bestimmt ist, mit den Tanninen in Gegenwart des Katalysators zu reagieren, der aus einer Säure oder einer Mischung von Säuren besteht, und
- mindestens eine Substanz, die dazu bestimmt ist, mit dem Isocyanat in Gegenwart des Katalysators zu reagieren, der aus einer Säure oder einer Mischung von Säuren besteht,
- Mischen der ersten, zweiten und dritten Komponenten miteinander, wobei man sie miteinander reagieren lässt, um den Schaumstoff zu bilden.

11. Verfahren nach Anspruch 10, **dadurch gekennzeichnet, dass** es den Schritt der Herstellung der ersten Komponente (Komponente I) unter Verwendung einer Menge an Isocyanat von wesentlich mehr als 10 Gew.-%, bezogen auf die Zusammensetzung, umfasst.

12. Verfahren nach Anspruch 11, **dadurch gekennzeichnet, dass** die Menge des zur Herstellung der ersten Komponente (Komponente I) verwendeten Isocyanats nicht weniger als 15 Gew.-%, bezogen auf die Zusammensetzung, beträgt.

13. Verfahren nach einem der Ansprüche 10 bis 12, **dadurch gekennzeichnet, dass** es den Schritt der Herstellung der zweiten Komponente (Komponente C) unter Verwendung einer Säure oder einer Mischung von Säuren in einer Menge von nicht mehr als 20 Gew.-% der Zusammensetzung, vorzugsweise im Bereich zwischen 2 und 19 Gew.-% der Zusammensetzung, umfasst.

14. Verfahren nach Anspruch 13, **dadurch gekennzeichnet, dass** die Menge der Säure oder der Mischung von Säuren, die zur Herstellung der zweiten Komponente (Komponente C) verwendet wird, im Bereich zwischen 4 und 10 Gew.-% der Zusammensetzung liegt.

15. Verfahren nach Anspruch 13 oder 14, **dadurch gekennzeichnet, dass** es den Schritt der Bildung der zweiten Komponente (Komponente C) als eine Lösung der Säure oder Mischung von Säuren in Wasser, Ethylenglykol, Propylenglykol, anderen Glykolen oder Glycerin oder in einer Mischung davon umfasst.

16. Verfahren nach einem der Ansprüche 10 bis 15, **dadurch gekennzeichnet, dass** es den Schritt der Herstellung der dritten Komponente (Komponente R) unter Verwendung einer Menge an Tanninen im Bereich zwischen 15 und 50 Gew.-% der Zusammensetzung, vorzugsweise zwischen 20 und 45 Gew.-% der Zusammensetzung, umfasst.

17. Verfahren nach einem der Ansprüche 10 bis 16, **dadurch gekennzeichnet, dass** es den Schritt der Zugabe von Additiven zu der Zusammensetzung in einer Menge von nicht mehr als 20 Gew.-% der Zusammensetzung umfasst, wie z.B. Wasser, Fluidisierungsmittel, Dispergiermittel, Tenside oder Netzmittel, Emulgatoren und/oder oberflächenaktive Stabilisierungsmittel, Härtungsbeschleuniger, Vernetzungsmittel, Mittel zur Verbesserung der mechanischen Festigkeit, Hydrophobierungsmittel, "zellöffnende" Mittel und/oder Neutralisierungsmittel, wobei diese Additive in mindestens einer der ersten, zweiten oder dritten Komponente (Komponenten I, C, R) enthalten sind oder Teil einer anderen Komponente sind, die unabhängig von der ersten, zweiten oder dritten Komponente (Komponenten I, C, R) ist und dazu bestimmt ist, der Mischung nach dem Mischen der ersten, zweiten oder dritten Komponenten (Komponenten I, C, R) zugesetzt zu werden.

## Revendications

1. Composition polymérique pour la fabrication d'un matériau en mousse à base de polyphénols comprenant de l'isocyanate, un catalyseur acide et des tanins,
**caractérisée en ce qu'**elle présente une structure mixte tanin-furane-isocyanate dans laquelle les tanins font partie d'une résine ayant la fonction de réactif pour la composition, et **en ce qu'**elle est totalement exempte de solvants à bas point d'ébullition, la quantité d'isocyanate n'étant pas inférieure à 10% en poids par rapport à la composition.

2. Composition selon la revendication 1, **caractérisée en ce que** la quantité d'isocyanate n'est pas inférieure à 15% en poids par rapport à la composition.

3. Composition selon les revendications 1 ou 2, **caractérisée en ce que** la quantité des tanins est inférieure à 40% en poids de la composition, de préférence comprise entre 15% et 40% en poids de la composition.

4. Composition selon l'une quelconque des revendications 1 à 3, **caractérisée en ce que** ladite résine ayant la fonction de réactif pour -la composition, est une résine polyphénolique à base de tanin comprenant au moins une substance destinée à réagir avec les tanins en présence du catalyseur acide, et au moins une substance destinée à réagir avec l'isocyanate en présence du catalyseur acide.

5. Composition selon l'une quelconque des revendications 1 à 4, **caractérisée en ce que** la quantité du catalyseur acide n'est pas supérieure à 20% en poids de la composition, et elle est de préférence comprise entre 2% et 19% en poids de la composition.

6. Composition selon la revendication 5, **caractérisée en ce que** la quantité du catalyseur acide est comprise entre 4% et 10% en poids de la composition.

7. Composition selon l'une quelconque des revendications 1 à 6, **caractérisée en ce que** le catalyseur acide est utilisé en solution avec de l'eau, de l'éthylène glycol, du propylène glycol, d'autres glycols ou du glycérol, ou avec les mélanges de ceux-ci.

8. Composition selon l'une quelconque des revendications 1 à 7, **caractérisée en ce qu'**elle comprend des additifs selon une quantité n'excédant pas 20% de la composition, tels que de l'eau, des agents fluidifiants, des agents dispersants, des tensioactifs ou des agents mouillants, des émulsionnants et/ou les agents tensioactifs stabilisants, les agents accélérateurs de durcissement, les agents de réticulation, les agents améliorant la résistance mécanique, les agents hydrophobes, les agents "d'ouverture de cellules", et/ou les agents neutralisants.

9. Matériau en mousse à base de polyphénols, **caractérisé en ce qu'**il est susceptible d'être obtenu à partir d'une composition selon l'une quelconque des revendications 1 à 8.

10. Procédé de fabrication d'un matériau mousse à base de polyphénols à partir d'une composition polymérique selon l'une quelconque des revendications 1 à 8, comprenant de l'isocyanate, un catalyseur acide et des tanins, **caractérisé en ce qu'**il comprend les étapes consistant à :
- préparer un premier composant (Composant I) comprenant un isocyanate,
- préparer un deuxième composant (Composant C) comprenant un acide ou un mélange d'acides, ayant la fonction d'un catalyseur,
- préparer un troisième composant (Composant R) sous la forme d'une résine polyphénolique ayant la fonction d'un réactif, qui comprend :
- des tanins,
- au moins une substance destinée à réagir avec les tanins en présence dudit catalyseur constitué d'un acide ou d'un mélange d'acides, et
- au moins une substance destinée à réagir avec l'isocyanate en présence dudit catalyseur constitué d'un acide ou d'un mélange d'acides,
- mélanger lesdits premier, deuxième et troisième composants les uns avec les autres, ce qui leur permet de réagir les uns avec les autres pour former le matériau en mousse.

11. Procédé selon la revendication 10, **caractérisé en ce qu'**il comprend l'étape consistant à préparer ledit premier composant (Composant I) en utilisant une quantité d'isocyanate sensiblement supérieure à 10% en poids par rapport à la composition.

12. Procédé selon la revendication 11, **caractérisé en ce que** la quantité d'isocyanate utilisée pour préparer ledit premier composant (Composant I) n'est pas inférieure à 15% en poids par rapport à la composition.

13. Procédé selon l'une quelconque des revendications 10 à 12, **caractérisé en ce qu'**il comprend l'étape consistant à préparer ledit deuxième composant (Composant C) en utilisant un acide ou un mélange d'acides selon une quantité au plus égale à 20% en poids de la composition, de préférence comprise entre 2% et 19% en poids de la composition.

14. Procédé selon la revendication 13, **caractérisé en ce que** la quantité de l'acide ou du mélange d'acides utilisé pour préparer ledit deuxième composant (Composant C) est comprise entre 4% et 10% en poids de la composition.

15. Procédé selon la revendication 13 ou la revendication 14, **caractérisé en ce qu'**il comprend l'étape consistant à former ledit deuxième composant (Composant C) sous la forme d'une solution dudit acide ou mélange d'acides dans l'eau, l'éthylène glycol, le propylène glycol, d'autres glycols ou le glycérol, ou dans un mélange de ceux-ci.

16. Procédé selon l'une quelconque des revendications 10 à 15, **caractérisé en ce qu'**il comprend l'étape consistant à préparer ledit troisième composant (Composant R) en utilisant une quantité de tanins comprise entre 15% et 50% en poids de la composition, de préférence entre 20% et 45% en poids de la composition.

17. Procédé selon l'une quelconque des revendications 10 à 16, **caractérisé en ce qu'**il comprend l'étape consistant à ajouter des additifs à ladite composition selon une quantité n'excédant pas 20% en poids de la composition, tels que de l'eau, des agents fluidifiants, des agents dispersants, des tensioactifs ou des agents mouillants, des émulsifiants et/ou des tensioactifs stabilisants. agents accélérateurs de durcissement, agents réticulants, agents améliorant la résistance mécanique, agents hydrophobes, agents "d'ouverture de cellule", et/ou agents neutralisants, lesdits additifs étant incorporés dans au moins l'un desdits premier, deuxième ou troisième composant (Composants I, C, R), ou faisant partie d'un composant différent, indépendant dudit premier, deuxième ou troisième composant (Composants I, C, R) et adapté pour être ajouté au mélange après mélange dudit premier, deuxième ou troisième composant (Composants I, C, R) .
